(19) Europäisches Patentamt
European Patent Office
Office européen des brevets

(11) **EP 4 233 084 B1**

(12) **EUROPÄISCHE PATENTSCHRIFT**

(45) Veröffentlichungstag und Bekanntmachung des Hinweises auf die Patenterteilung:
**11.02.2026   Patentblatt 2026/07**

(21) Anmeldenummer: **21844654.0**

(22) Anmeldetag: **21.12.2021**

(51) Internationale Patentklassifikation (IPC):
*H01H 9/54* (2006.01)   *G01R 31/52* (2020.01)
*H02H 7/26* (2006.01)   *G01R 19/25* (2006.01)
*H02H 3/08* (2006.01)   *H01H 71/12* (2006.01)
*H02H 1/00* (2006.01)

(52) Gemeinsame Patentklassifikation (CPC):
**H01H 9/547; H01H 9/548; H01H 71/125; H02H 3/05; H02H 3/08**

(86) Internationale Anmeldenummer:
**PCT/EP2021/087063**

(87) Internationale Veröffentlichungsnummer:
**WO 2022/136414 (30.06.2022 Gazette 2022/26)**

(54) **SCHUTZSCHALTGERÄT UND VERFAHREN**

PROTECTIVE SWITCHING DEVICE AND METHOD

DISJONCTEUR ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020   DE 102020216416
20.12.2021   EP 21216137**

(43) Veröffentlichungstag der Anmeldung:
**30.08.2023   Patentblatt 2023/35**

(73) Patentinhaber: **Siemens Aktiengesellschaft
80333 München (DE)**

(72) Erfinder: **TANNHÄUSER, Marvin
91353 Hausen (DE)**

(74) Vertreter: **Siemens Patent Attorneys
Postfach 22 16 34
80506 München (DE)**

(56) Entgegenhaltungen:
WO-A1-2012/038237   DE-U1- 202009 014 759
US-A1- 2012 146 655   US-A1- 2019 103 742
US-A1- 2020 366 078

**Beschreibung**

Die Erfindung betrifft das technische Gebiet eines Schutzschaltgerät für einen Niederspannungsstromkreis mit einer elektronischen Unterbrechungseinheit und ein Verfahren für ein Schutzschaltgerät für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom, der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt. US-A-2020366078 offenbart ein Beispiel von Schutzschaltgerät mit elektronischer und mechanischer Abschalttechnik.

Bei halbleiterbasierten Schutzschaltgeräte bzw. Schutzgeräten, neudeutsch Solid State Circuit Breaker, kurz SSCB, muss die Schaltenergie nicht wie bei einem mechanischen Schaltgerät in einen Lichtbogen, sondern mittels eines zusätzlichen Schaltkreises, dem Energy Absorber, in Wärme umgesetzt werden. Die Abschaltenergie umfasst dabei die im Stromkreis, d.h. in den Netz-, Leitungs- bzw. Lastimpedanzen (Verbraucherimpedanzen), gespeicherte Energie. Um den Energy Absorber zu entlasten, muss der Strom, der im Moment des Abschaltens fließt, möglichst gering sein. Dies gilt auch im Falle eines Kurzschlusses. Hier steigt der Strom sehr schnell an. Durch schnelle Kurzschlusserkennung kann ein Kurzschluss frühzeitig erkannt und ein zu hoher Kurzschlussstrom vermieden werden. Das halbleiterbasierte Schutzschaltgerät unterbricht, im Sinne eines Abschaltvorganges, nahezu unverzögert, innerhalb von μs, den Stromkreis. Es treten keine hohen Ströme auf und die Belastung des Energy Absorbers eines halbleiterbasierten Schutzschaltgerätes wird reduziert. Bekannte Kurschlusserkennungen bzw. Abschaltkriterien basieren üblicherweise auf der Ermittlung und Auswertung des Strom-Istwertes.

Die vorliegende Erfindung bezieht sich auf Niederspannungswechselstromkreise, mit einer Wechselspannung, üblicherweise mit einer zeitabhängigen sinusförmigen Wechselspannung mit der Frequenz f, typischerweise 50 oder 60 Hertz (Hz). Die zeitliche Abhängigkeit des momentanen Spannungswertes $u(t)$ der Wechselspannung ist durch die Gleichung:

$$u(t) = U * sin (2\pi * f * t)$$

beschrieben. Wobei:

u(t) = momentaner Spannungswert zu der Zeit t
U = Amplitude (Maximalwert) der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt $2\pi$ (2Pi) bzw. 360°. Die Kreisfrequenz ist die Änderungsrate des Phasenwinkels dieses rotierenden Zeigers. Die Kreisfrequenz einer harmonischen Schwingung beträgt immer das $2\pi$-fache ihrer Frequenz, d.h.:

$$\omega = 2\pi*f = 2\pi/T = Kreisfrequenz\ der\ Wechselspannung$$

(T = Periodendauer der Schwingung)

Häufig wird die Angabe der Kreisfrequenz (ω) gegenüber der Frequenz (f) bevorzugt, da sich viele Formeln der Schwingungslehre aufgrund des Auftretens trigonometrischer Funktionen, deren Periode per Definition $2\pi$ ist, mit Hilfe der Kreisfrequenz kompakter darstellen lassen:

$$u(t) = U * sin(\omega t)$$

Im Falle zeitlich nicht konstanter Kreisfrequenzen wird auch der Begriff momentane Kreisfrequenz verwendet.
Bei einer sinusförmigen, insbesondere zeitlich konstanten, Wechselspannung entspricht der zeitabhängige Wert aus der Winkelgeschwindigkeit ω und der Zeit t dem zeitabhängigen Winkel φ(t), der auch als Phasenwinkel φ(t) bezeichnet wird. D.h. der Phasenwinkel φ(t) durchläuft periodisch den Bereich 0...$2\pi$ bzw. 0°...360°. D.h. der Phasenwinkel nimmt periodisch einen Wert zwischen 0 und $2\pi$ bzw. 0° und 360° an (φ = n*(0...$2\pi$) bzw. φ = n*(0°...360°), wegen Periodizität; verkürzt: φ = 0...$2\pi$ bzw. φ = 0°...360°).
Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel φ gemeint (φ = 0...$2\pi$ bzw. φ = 0°...360°, der jeweiligen Periode).
Aufgabe der vorliegenden Erfindung ist es, ein Schutzschaltgeräte eingangs genannter Art zu verbessern, insbesondere die Sicherheit eines Schutzschaltgerätes und die Sicherheit im Niederspannungsstromkreis zu erhöhen, insbesondere ungewollte, durch Fehler oder Alterung verursachte, Ströme zu vermeiden.
Diese Aufgabe wird durch ein Schutzschaltgeräte mit den Merkmalen des Patentanspruchs 1, sowie durch ein Verfahren gemäß Patentanspruch 15 gelöst.
Erfindungsgemäß ist ein (elektronisches) Schutzschaltgerät zum Schutz eines elektrischen Niederspannungsstromkreises, insbesondere Niederspannungswechselstromkreises, vorgesehen, aufweisend:

- ein Gehäuse, mit ersten, insbesondere netzseitigen, und zweiten, insbesondere lastseitigen, Anschlüssen für Leiter des Niederspannungsstromkreises,
- eine mechanische Trennkontakteinheit, die in Serie mit einer elektronischen Unterbrechungseinheit geschaltet ist, wobei insbesondere die mechanische Trennkontakteinheit den (zweiten) lastseitigen Anschlüssen und die elektronische Unterbrechungseinheit den (ersten) netzseitigen Anschlüssen zugeordnet ist,
- dass die mechanische Trennkontakteinheit durch ein Öffnen von Kontakten zur Vermeidung eines Stromflusses oder ein Schließen der Kontakte für einen Stromfluss im Niederspannungsstromkreis schaltbar ist,
- dass die elektronische Unterbrechungseinheit durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- einer Stromsensoreinheit, zur Ermittlung der Höhe des Stromes (mindestens eines Leiters, insbesondere des Phasenleiters) des Niederspannungsstromkreises, derart das momentane Stromwerte vorliegen,
- einer Steuerungseinheit, die mit der Stromsensoreinheit, der mechanischen Trennkontakteinheit und der elektronischen Unterbrechungseinheit verbunden ist,
  wobei bei Überschreitung der Höhe des Stromes über mindestens einen Stromschwellwert eine Vermeidung eines Stromflusses des Niederspannungsstromkreises durch hochohmig schalten der elektronischen Unterbrechungseinheit (EU) initiiert wird,
- dass das Schutzschaltgerät derart ausgestaltet ist, dass bei hochohmiger bzw. hochohmig geschalteter elektronischer Unterbrechungseinheit (d.h. wenn die elektronischer Unterbrechungseinheit im hochohmigen Zustand sein soll) und einem Strom im Niederspannungsstromkreis, der einen ersten Fehlerstromschwellwert überschreitet, ein Öffnen von Kontakten der mechanischen Trennkontakteinheit initiiert wird.

Erfindungsgemäß soll erreicht werden, dass bei hochohmiger bzw. hochohmig geschalteter elektronischer Unterbrechungseinheit eine Vermeidung eines Stromflusses im Niederspannungsstromkreis sicher erreicht wird. Werden trotz hochohmiger bzw. hochohmig geschalteter elektronischer Unterbrechungseinheit Ströme im Niederspannungsstromkreis ermittelt, insbesondere im Phasenleiter (insbesondere bei einem zweipoligen Schutzschaltgerät mit Neutral- und Phasenleiter), die einen Fehlerstromschwellwert überschreiten, wird sicherheitshalber eine galvanische Trennung durch Öffnen der Kontakte der mechanischen Trennkontakteinheit initiiert.

So wird die Sicherheit im Niederspannungsstromkreis mittels einen sicheren Schutzschaltgerätes erhöht.

Dies hat ferner den besonderen Vorteil, dass bei (gefährlichen) Restströmen oder einer fehlerhaften elektronischen Unterbrechungseinheit eine Freischaltung des Stromkreises gegeben ist, d.h. eine erhöhte Sicherheit wird bereitgestellt.

Vorsteilhafte Ausgestaltungen der Erfindung sind in den Unteransprüchen angegeben.

In einer vorteilhaften Ausgestaltung der Erfindung sind die ersten Anschlüsse netzseitige Anschlüsse und die zweiten Anschlüsse lastseitige Anschlüsse. Die mechanische Trennkontakteinheit ist den lastseitigen Anschlüssen und die elektronische Unterbrechungseinheit ist den netzseitigen Anschlüssen zugeordnet.

Dies hat den besonderen Vorteil, dass eine Energieversorgung des Schutzschaltgerätes gegeben ist, insbesondere der Steuerungseinheit. Ferner, dass auch bei geöffneten Kontakten der mechanischen Trennkontakteinheit eine Energieversorgung des Schutzschaltgerätes gegeben ist.

In einer vorteilhaften Ausgestaltung der Erfindung ist eine mit der Steuerungseinheit verbundene Kommunikationseinheit vorgesehen. Mit Kommunikationseinheit ist insbesondere eine drahtlose oder drahtgebundene bzw. optische Kommunikation zu einem anderen Schutzschaltgerät, einem Computer oder einem übergeordneten Managementsystem gemeint. Das Schutzschaltgerät ist derart ausgestaltet, dass bei hochohmiger bzw. hochohmig geschalteter elektronischer Unterbrechungseinheit und einem Strom im Niederspannungsstromkreis, der den ersten Fehlerstromschwellwert überschreitet, eine Information mittels der Kommunikationseinheit signalisiert wird.

Dies hat den besonderen Vorteil, dass ein derartiges Problem gemeldet wird und so Maßnahmen ergriffen werden können, um die Sicherheit wieder zu erhöhen.

In einer vorteilhaften Ausgestaltung der Erfindung ist eine mit der Steuerungseinheit verbundene Anzeigeeinheit vorgesehen, insbesondere für eine Informationsanzeige am Schutzschaltgerät. Das Schutzschaltgerät ist derart ausgestaltet, dass bei hochohmiger bzw. hochohmig geschalteter elektronischer Unterbrechungseinheit und einem Strom im Niederspannungsstromkreis, der den ersten Fehlerstromschwellwert überschreitet, eine Informationsanzeige erfolgt.

Dies hat den besonderen Vorteil, dass das fehlerhafte Verhalten am Schutzschaltgerät signalisiert wird.

In einer vorteilhaften Ausgestaltung der Erfindung liegt der erste Fehlerstromschwellwert im Bereich 30 mA, 6 mA oder 300 mA. Spezieller im Bereich 26 bis 30 mA, insbesondere um vorteilhaft einen Personenschutz, speziell in Europa, zu gewährleisten. Spezieller im Bereich 4 bis 6 mA, insbesondere um vorteilhaft einen Personenschutz, speziell in Nordamerika/USA, zu gewährleisten. Spezieller im Bereich 290 bis 300 mA, insbesondere um vorteilhaft einen Brandschutz zu gewährleisten.

In einer vorteilhaften Ausgestaltung der Erfindung wird bei geschlossenen Kontakten der mechanischen Trennkontakteinheit und hochohmig werden der elektronischen Unterbrechungseinheit eine Überprüfung auf Überschreitung des ersten Fehlerstromschwellwertes erst nach einer ersten Zeitgrenze durchgeführt. Insbesondere nach einer ersten Zeitgrenze von mindestens 50 µs, spezieller nach 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs oder 1ms. Dies hat den besonderen Vorteil, dass eine Überprüfung erst nach einer, insbesondere für den Personenschutz, unkritischen Zeitgrenze durchgeführt wird und so das Schaltverhalten der elektronischen Unterbrechungseinheit, insbesondere von vorhandenen Energie-Absorbern oder Überspannungsschutzelementen, mitberücksichtigt wird, um Fehlauslösungen bzw. nicht notwendige Unterbrechungen durch die mechanische Trennkontakteinheit zu vermeiden.

In einer vorteilhaften Ausgestaltung der Erfindung muss die Überschreitung des ersten Fehlerstromschwellwertes für eine erste Zeitdauer vorliegen, um eine Öffnung der Kontakte, eine Signalisierung der Information bzw. eine Informationsanzeige zu bewirken.

Dies hat den besonderen Vorteil, dass (unkritische) kurzzeitige Transienten, insbesondere hervorgerufen durch das Schaltverhalten der elektronischen Unterbrechungseinheit, insbesondere von vorhandenen Energie-Absorbern oder Überspannungsschutzelementen, nicht berücksichtigt wird. So werden Fehlauslösungen bzw. nicht notwendige Unterbrechungen durch die mechanische Trennkontakteinheit vermieden, um die Verfügbarkeit der Energieversorgung nicht einzuschränken und die Versorgungssicherheit zu gewährleisten.

In einer vorteilhaften Ausgestaltung der Erfindung ist die erste Zeitdauer abhängig von der Höhe des ermittelten Stromes.

Dies hat den besonderen Vorteil, dass eine erhöhte Sicherheit gewährleistet wird. Bei hohen Strömen wird schnell ausgelöst, bei geringen Strömen kann länger das Verhalten beobachtet werden. So wird einerseits Personen-Sicherheit aber auch Versorgungs-Sicherheit gewährleistet.

In einer vorteilhaften Ausgestaltung der Erfindung ist die erste Zeitdauer mindestens 50 $\mu$s ist, insbesondere größer als 100 $\mu$s, 150 $\mu$s, 200 $\mu$s, 250 $\mu$s, 300 $\mu$s, 350 $\mu$s, 400 $\mu$s, 450 $\mu$s, 500 $\mu$s, 550 $\mu$s, 600 $\mu$s, 650 $\mu$s, 700 $\mu$s, 750 $\mu$s, 800 $\mu$s, 850 $\mu$s, 900 $\mu$s, 950 $\mu$s oder 1 ms.

Ferner kann die erste Zeitdauer maximal 5 ms betragen. Dies hat den besonderen Vorteil, dass konkrete Zeitdauern vorliegen.

In einer vorteilhaften Ausgestaltung der Erfindung ist eine mit der Steuerungseinheit verbundene Spannungssensoreinheit vorgesehen ist, zur Ermittlung der Höhe der Spannung über der elektronischen Unterbrechungseinheit, insbesondere eines Leiters, insbesondere des Phasenleiters. Die Höhe der Spannung wird mit einem Spannungsschwellwert verglichen und bei Überschreitung des Spannungsschwellwertes wird eine Überprüfung auf Überschreitung des ersten Fehlerstromschwellwertes für eine zweite Zeitdauer ausgesetzt.

Die zweite Zeitdauer kann kleiner als 10 ms sein.

Der Spannungsschwellwert ist größer als die Amplitude der (nominellen) Netzspannung des Niederspannungsstromkreises (bei einem 230 Volt Netz folglich größer als 325 Volt).

Insbesondere ist der Spannungsschwellwert höher als der einer erhöhten Netzspannung. Eine erhöhte Netzspannung ist beispielsweise eine Spannung von mehr als 10% über der (nominellen) Amplitude der Netzspannung (bei einem 230 Volt Netz mit einer Amplitude von etwa 325 Volt folglich ca. 360 Volt).

Insbesondere ist der Spannungsschwellwert kleiner als die Spannungsfestigkeit der eingesetzten halbleiterbasierten Schaltelemente (Leistungs-Halbleiter) der elektronischen Unterbrechungseinheit.

Dies hat den besonderen Vorteil, dass (temporär) ungültige Netzzustände berücksichtigt werden, d.h. wenn beispielsweise ein Surge auftritt bzw. ein Blitz in den Niederspannungsstromkreis einschlägt bzw. ein Blitz temporäre Überspannungen erzeugt, so werden diese erfindungsgemäß nicht berücksichtigt.

So wird die Robustheit des Schutzschaltgerätes erhöht, ohne die Sicherheit zu vernachlässigen.

In einer vorteilhaften Ausgestaltung der Erfindung ist ein, insbesondere einziges, Einstellelement am Schutzschaltgerät vorgesehen, mit dem ein Grenzwert für den Stromschwellwert oder Stromanstieg einstellbar ist, um den Grenzwert für die Überstrom- oder Kurzschlusserkennung einzustellen.

Dies hat den besonderen Vorteil, dass die Einstellung durch einen Stromschwellwert bzw. durch einen Stromanstiegsschwellwert respektive Stromänderungsschwellwert erfolgen kann.

In einer vorteilhaften Ausgestaltung der Erfindung ist das Schutzschaltgerät derart ausgestaltet, dass die Steuerungseinheit eine analoge erste Teileinheit und eine digitale zweite Teileinheit aufweist. Die erste Teileinheit weist einen Stromkomparator auf, dem die momentanen Stromwerte oder Stromänderungswerte und mindestens ein Stromschwellwerte oder momentaner Stromänderungsschwellwerte, insbesondere von der zweiten Teileinheit (SED), zugeführt werden. Die Stromschwellwerte oder Stromänderungsschwellwerte werden gemäß dem zeitlichen Verlauf der Spannung von der zweiten Teileinheit phasenbezogenen bereitgestellt. Hiermit wird ein auf den zeitlichen Verlauf der Spannung phasenbezogener Vergleich der momentanen Stromwerte oder der momentanen Stromänderungswerte mit dem mindestens einen Stromschwellwert oder den momentanen Stromänderungsschwellwerten ermöglicht. Womit eine Unterbrechung des Niederspannungsstromkreises bei Überschreitung initiiert werden kann.

Dies hat den besonderen Vorteil, einer einfachen Implementierung der Lösung.

In einer vorteilhaften Ausgestaltung der Erfindung ist das Schutzschaltgerät derart ausgestaltet, dass eine Netzsynchronisationseinheit vorgesehen ist. Diese ermittelt aus den zugeführten momentanen Spannungswerten mindestens einen Phasenwinkel ($\varphi(t)$) der Spannung und alternativ die Amplitude ($U$) der Spannung. Eine Schwellwerteinheit ist vorgesehen, die mit der Netzsynchronisationseinheit und gegebenenfalls dem Einstellelement verbunden ist, so dass mit dem Phasenwinkel ($\varphi(t)$) der Spannung, der Amplitude ($U$) der Spannung und dem, insbesondere eingestellten, Grenzwert für den Stromschwellwert oder Stromanstieg momentane Strom(änderungs)schwellwerte ermittelt werden. Die momentanen Strom(änderungs)werte werden phasenbezogen mit den momentanen Strom(änderungs)schwellwerten verglichen, zur Ermittlung der Initiierung einer Unterbrechung.

Dies hat den besonderen Vorteil einer weiteren einfachen Implementierung der Lösung.

In einer vorteilhaften Ausgestaltung der Erfindung ist das mechanische Trennkontaktsystem derart ausgestaltet, dass eine galvanische Trennung mit Trennereigenschaften gemäß Norm, d.h. eine Freischaltung (im Gegensatz zu einer Abschaltung) realisiert werden kann. So liegt ein normgerechtes Schutzschaltgerät vor.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Beim Verfahren zum Schutz eines elektrischen Niederspannungsstromkreis wird:

- eine mechanisch Trennkontakteinheit in Serie mit einer elektronischen Unterbrechungseinheit geschaltet,

- die mechanische Trennkontakteinheit ist durch ein Öffnen von Kontakten zur Vermeidung eines Stromflusses oder ein Schließen der Kontakte für einen Stromfluss im Niederspannungsstromkreis schaltbar,
- die elektronische Unterbrechungseinheit ist durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar,
- die Höhe des Stromes im Niederspannungsstromkreises wird ermittelt und bei Überschreitung der Höhe des Stromes über mindestens einen Stromschwellwert (oder Stromänderungsschwellwert) wird eine Vermeidung eines Stromflusses des Niederspannungsstromkreises durch hochohmig schalten der elektronischen Unterbrechungseinheit initiiert,
- bei hochohmiger bzw. hochohmig geschalteter elektronischer Unterbrechungseinheit wird weiterhin die Höhe des Stromes im Niederspannungsstromkreis ermittelt (insbesondere im PhasenLeiter) und bei Überschreitung eines ersten Fehlerstromschwellwertes wird ein Öffnen der Kontakten der mechanischen Trennkontakteinheit initiiert.

In einer vorteilhaften Ausgestaltung wird bei Überschreitung des ersten Fehlerstromschwellwertes eine Information signalisiert.

In einer vorteilhaften Ausgestaltung wird bei geschlossenen Kontakten der mechanischen Trennkontakteinheit und hochohmig werden der elektronischen Unterbrechungseinheit eine Überprüfung auf Überschreitung des ersten Fehlerstromschwellwertes nach einer ersten Zeitgrenze durchgeführt.

In einer vorteilhaften Ausgestaltung wird muss die Überschreitung des ersten Fehlerstromschwellwertes für eine erste Zeitdauer vorliegen, um eine Öffnung der Kontakte, eine Signalisierung der Information bzw. eine Informationsanzeige zu bewirken.

Erfindungsgemäß wird ein korrespondierendes Computerprogrammprodukt beansprucht. Das Computerprogrammprodukt umfass Befehle, die bei der Ausführung des Programms durch einen Mikrocontroller (=Mikroprozessor) diesen veranlassen die Sicherheit eines derartigen Schutzschaltgerätes zu verbessern bzw. eine höhere Sicherheit im durch das Schutzschaltgerät zu schützenden elektrischen Niederspannungsstromkreis zu erreichen, speziell dass die mechanische Trennkontakteinheit in bestimmten Fällen eine Vermeidung eines elektrischen Stromflusses durchführt. Der Mikrocontroller (=Mikroprozessor) ist Teil des Schutzschaltgerätes, insbesondere der Steuerungseinheit.

Erfindungsgemäß wird ein korrespondierendes computerlesbares Speichermedium, auf dem das Computerprogrammprodukt gespeichert ist, beansprucht.

Erfindungsgemäß wird ein korrespondierendes Datenträgersignal, das das Computerprogrammprodukt überträgt, beansprucht

Alle Ausgestaltungen, sowohl in abhängiger Form rückbezogen auf den Patentanspruch 1 bzw. 15, als auch rückbezogen lediglich auf einzelne Merkmale oder Merkmalskombinationen von Patentansprüchen, bewirken eine Verbesserung eines Schutzschaltgerätes zur Erhöhung der Sicherheit.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1 eine erste Darstellung eines Schutzschaltgerätes,
Figur 2 eine zweite Darstellung eines Schutzschaltgerätes,
Figur 3 eine dritte Darstellung eines Schutzschaltgerätes,
Figur 4 eine erste Ausgestaltung des Schutzschaltgerätes.

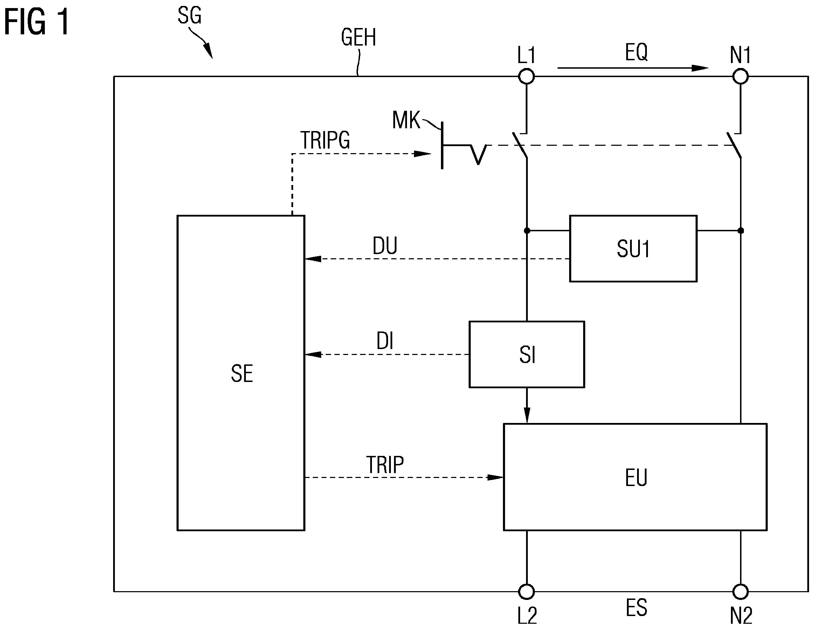

Figur 1 zeigt eine Darstellung eines Schutzschaltgerätes SG zum Schutz eines elektrischen Niederspannungsstromkreises mit einem Gehäuse GEH, aufweisend:

- Anschlüsse für Leiter des Niederspannungsstromkreises, insbesondere erste Anschlüsse L1, N1 für eine netzseitigen, insbesondere energiequellenseitigen, Anschluss EQ des Schutzschaltgerätes SG und zweite Anschlüsse L2, N2 für einen lastseitigen, insbesondere energiesenkenseitigen - im Falle passiver Lasten, Anschluss ES (verbraucherseitigen Anschluss) des Schutzschaltgerätes SG, wobei speziell phasenleiterseitige Anschlüsse L1, L2 und neutralleiterseitige Anschlüsse N1, N2 vorgesehen sein können;
  der lastseitige Anschluss kann eine passive Last (Verbraucher) oder/und eine aktive Last ((weitere) Energiequelle aufweisen, bzw. eine Last, die sowohl passiv als auch aktiv sein kann, z.B. in zeitlicher Abfolge;
- einen (optionalen) ersten Spannungssensor bzw. erste Spannungssensoreinheit SU, zur Ermittlung der Höhe der Spannung des Niederspannungsstromkreises, so dass momentane Spannungswerte (phasenbezogene Spannungswerte) DU vorliegen,
- einen Stromsensor bzw. Stromsensoreinheit SI, zur Ermittlung der Höhe des Stromes des Niederspannungsstromkreises, derart das momentane (phasenwinkelbezogene) Stromwerte DI vorliegen,

- einer elektronischen Unterbrechungseinheit EU, die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist bzw. schaltbar ist,

- eine mechanische Trennkontakteinheit MK, die durch ein Öffnen von Kontakten zur Vermeidung eines Stromflusses oder ein Schließen der Kontakte für einen Stromfluss im Niederspannungsstromkreis schaltbar ist,

- einer Steuerungseinheit SE, die mit der (optionalen) ersten Spannungssensoreinheit SU1, der Stromsensoreinheit SI und der elektronischen Unterbrechungseinheit EU verbunden ist;

die Steuerungseinheit SE kann:

* mit einer digitalen Schaltung, z.B. mit einem Mikroprozessor (= Mikrocontroller), realisiert sein; der Mikroprozessor kann auch einen Analog-Teil enthalten;
* mit einer digitalen Schaltung mit analogen Schaltungsteilen realisiert sein.

Das Schutzschaltgerät SG, insbesondere die Steuerungseinheit SE, ist derart ausgestaltet, dass bei Überschreitung der Höhe des Stromes über mindestens einen Stromschwellwert eine Vermeidung eines Stromflusses des Niederspannungsstromkreises durch hochohmig schalten der elektronischen Unterbrechungseinheit EU initiiert wird, dass bei hochohmiger bzw. hochohmig geschalteter elektronischer Unterbrechungseinheit EU und einem Strom im Niederspannungsstromkreis, der einen ersten Fehlerstromschwellwert überschreitet, ein Öffnen von Kontakten der mechanischen Trennkontakteinheit MK initiiert wird.

Bei einer Erkennung eines, insbesondere lastseitigen (ES), Kurzschlusses wechselt die elektronische Unterbrechungseinheit EU vom niederohmigen Zustand in den hochohmigen Zustand zur Unterbrechung des Niederspannungsstromkreises, wobei dieser Vorgang eine Auslösezeit vom Kurzschlussereignis bis zum hochohmigen Zustand aufweist. Dies kann durch eine mitlaufende Anpassung der Stromschwellwerte erfolgen. Dabei kann vom (periodischen) zeitlichen Verlauf der Höhe der Spannung bzw. der ermittelten momentanen Spannungswerte abhängige (periodische) momentane Strom(änderungs)schwellwerte vorliegen.

Die momentanen Strom(änderungs)schwellwerte können kontinuierlich oder phasenwinkelweise vorliegen.

Die momentanen Strom(änderungs)schwellwerte können dabei pro einzelnen Phasenwinkel, einen Phasenwinkelbereich (mehrere Phasenwinkel), z.B. alle 2°, oder einen Phasenwinkelabschnitt (ein Teil eines Phasenwinkels), z.B. alle 0,5° oder 0,1° vorliegen. Insbesondere eine Auflösung von 1° bis 5° ist besonders vorteilhaft (dies entspricht einer Abtastrate von 3,5 bis 20 kHz).

Die momentanen Strom(änderungs)werte werden phasenbezogen mit den momentanen Strom(änderungs)schwellwerten verglichen. Bei betragsmäßiger Überschreitung des momentanen Strom(änderungs)schwellwerte wird eine Unterbrechung des Niederspannungsstromkreises, z.B. durch ein erstes Unterbrechungssignal TRIP von der Steuerungseinheit SE zur elektronischen Unterbrechungseinheit EU, initiiert, wie in Figur 1 eingezeichnet.

Die elektronische Unterbrechungseinheit EU ist gemäß Figur 1 als Block in beiden Leitern eingezeichnet. Damit ist in einer ersten Variante keine Unterbrechung beider Leiter gemeint. Mindestens ein Leiter, insbesondere der aktive Leiter respektive Phasenleiter, weist halbleiterbasierte Schaltelemente auf. Der Neutralleiter kann schaltelementefrei sein, d.h. ohne halbleiterbasierte Schaltelemente. D.h. der Neutralleiter ist direkt verbunden, d.h. wird nicht hochohmig. D.h. es erfolgt nur eine einpolige Unterbrechung (des Phasenleiters). Sind weitere aktive Leiter / Phasenleiter vorgesehen, weisen in einer zweiten Variante der elektronischen Unterbrechungseinheit EU die Phasenleiter halbleiterbasierten Schaltelemente auf. Der Neutralleiter ist direkt verbunden, d.h. wird nicht hochohmig. Beispielsweise für einen Dreiphasen-Wechselstromkreis.

In einer dritten Variante der elektronischen Unterbrechungseinheit EU kann der Neutralleiter ebenfalls ein halbleiterbasiertes Schaltelement aufweisen, d.h. bei einer Unterbrechung der elektronischen Unterbrechungseinheit EU werden beide Leiter hochohmig.

Die elektronische Unterbrechungseinheit EU kann Halbleiterbauelemente wie Bipolartransistoren, Feldeffekttransistoren (FET), Isolated Gate Bipolartransistoren (IGBT), Metall Oxid Schicht Feldeffekttransistoren (MOSFET) oder andere (selbstgeführte) Leistungshalbleiter aufweisen. Insbesondere IGBT's und MOSFET's eignen sich auf Grund geringer Durchflusswiderstände, hoher Sperrschichtwiderstände und eines guten Schaltverhaltens besonderes gut für das erfindungsgemäße Schutzschaltgerät.

Das Schutzschaltgerät SG weist eine mechanische Trennkontakteinheit MK (= mechanisches Trennkontaktsystem MK) auf, insbesondere gemäß Norm mit normgerechten Trennereigenschaften, zur galvanischen Trennung des Stromkreises, insbesondere zum normgerechten Freischalten (im Gegensatz zum Abschalten) des Stromkreises. Die mechanische Trennkontakteinheit MK kann mit der Steuerungseinheit SE verbunden sein, wie in Figur 1 eingezeichnet, so dass die Steuerungseinheit SE eine galvanische Trennung des Stromkreises initiieren kann.

Speziell kann eine weitere Auswertung implementiert sein, die bei Erfüllung anderer Kriterien eine galvanische Trennung herbeiführt. Beispielsweise kann eine Überstromerkennung vorgesehen sein, beispielsweise in der Steuerungseinheit SE, die bei Überströmen, d.h. bei Überschreitung von Strom-Zeitgrenzwerten, d.h. wenn ein Strom, der einen Stromgrenzwert überschreitet, eine bestimmte Zeit anliegt, d.h. beispielsweise ein bestimmter Energieschwellwert überschritten, eine halbleiterbasierte oder/und galvanische Unterbrechung des Stromkreises erfolgen.

Alternativ bzw. zusätzlich kann beispielsweise bei einem erkannten Kurzschluss auch eine galvanische Trennung initiiert werden.

Die Initiierung der galvanischen Unterbrechung des Niederspannungsstromkreises erfolgt beispielsweise durch ein weiteres zweites Unterbrechungssignal TRIPG, dass von der Steuerungseinheit SE zum mechanisches Trennkontaktsystem MK gesendet wird, wie in Figur 1 eingezeichnet.

Erfindungsgemäß wird bei hochohmiger elektronischer Unterbrechungseinheit EU bzw. hochohmig geschalteter elektronischer Unterbrechungseinheit EU, d.h. wenn die elektronische Unterbrechungseinheit EU in einem hochohmigen Zustand sein soll, und einem Strom im Niederspannungsstromkreis, der insbesondere durch den Stromsensor SI festgestellt wird, der einen ersten Fehlerstromschwellwert überschreitet, eine galvanische Trennung initiiert werden. Der erste Stromschwellwert kann je nach Einsatzgebiet des Schutzschaltgerätes in der Größenordnung 4 bis 6 mA, insbesondere bei 5 mA oder 6 mA liegen. Der erste Stromschwellwert kann im Bereich 25 mA bis 32mA liegen, insbesondere bei 28 mA, 29 mA oder 30 mA, insbesondere für den Personenschutz in Europa. Der dritte Schwellwert kann im Bereich 290 mA bis 300 mA liegen, insbesondere für den Brandschutz. Jeder der genannten Rand- und Zwischenwerte ist offenbart.

Die Stromermittlung für diesen Fall wird erfindungsgemäß mit der Stromsensoreinheit SI durchgeführt. Ein weiterer Sensor, wie ein Summenstromwandler, wie er für Fehlerstromschutzschalter vorgesehen ist, muss nicht verwendet werden. Gleichwohl kann ein (zusätzlicher) Summenstromwandler im Schutzschaltgerät vorgesehen sein.

Mit der Erfindung sollen fehlerhafte Ströme bei defekter bzw. nicht vollständig hochohmiger Unterbrechungseinheit erkannt und abgestellt werden. Dies erfolgt erfindungsgemäß mit einer Stromsensoreinheit in einem Leiter (Phasenleiter).

In einer weiteren vorteilhaften Ausgestaltung kann bei einer ermittelten Stromhöhe, die einen zweiten Stromschwellwert überschreitet, eine Unterbrechung des Niederspannungsstromkreises initiiert werden, insbesondere durch das mechanische Trennkontaktsystem.

Der zweite Stromschwellwert entspricht beispielsweise den normgemäßen Strom-(Zeit-)Grenzwerten, d.h. den I-(t-)Kennlinien für Schutzgeräte, beispielsweise gemäß Norm IEC 60947 oder IEC 60898. Die gewählten Strom-(Zeit-) Grenzwerte wählt der Fachmann gemäß der vorliegenden Anwendung / Applikation.

In einer weiteren vorteilhaften Ausgestaltung kann bei einer Initiierung einer Unterbrechung des Niederspannungsstromkreises mittels der elektronischen Unterbrechungseinheit und einem Stromfluss im Niederspannungsstromkreis, der einen dritten Stromschwellwert überschreitet und für eine zweite Zeitspanne anhält, eine Unterbrechung des Niederspannungsstromkreises durch das mechanische Trennkontaktsystem initiiert werden, um z.B. eine fehlgeschlagenes Hochohmigkeit der elektronischen Unterbrechungseinheit und damit fehlgeschlagene Unterbrechung des Niederspannungsstromkreis eine Unterbrechung durch das mechanische Trennkontaktsystem herbeizuführen. So wird vorteilhaft die Betriebssicherheit erhöht. Ein solcher Vorgang kann vorteilhaft am Schutzschaltgerät angezeigt werden.

Der dritte Stromschwellwert und die zweite Zeitspanne entspricht beispielsweise den normgemäßen Strom-Zeit-Grenzwerten, d.h. den I-t-Kennlinien für Schutzgeräte, beispielsweise gemäß Norm IEC 60947 oder IEC 60898. Die gewählten Strom-Zeit-Grenzwerte wählt der Fachmann gemäß der vorliegenden Anwendung / Applikation.

Das mechanische Trennkontaktsystem MK kann in einer ersten Variante einpolig unterbrechen. D.h. es wird nur ein Leiter der beiden Leiter, insbesondere der aktive Leiter respektive Phasenleiter unterbrochen, d.h. weist einen mechanischen Kontakt auf. Der Neutralleiter ist dann kontaktfrei, d.h. der Neutralleiter ist direkt verbunden.

Sind weitere aktive Leiter / Phasenleiter vorgesehen, weisen in einer zweiten Variante die Phasenleiter mechanische Kontakte des mechanischen Trennkontaktsystems auf. Der Neutralleiter ist in dieser zweiten Variante direkt verbunden. Beispielsweise für einen Dreiphasen-Wechselstromkreis.

In einer dritten Variante des mechanischen Trennkontaktsystem MK weist der Neutralleiter ebenfalls mechanische Kontakte auf, wie in Figur 1 eingezeichnet.

Mit mechanischem Trennkontaktsystem MK ist insbesondere eine (normgerechte) Trennfunktion gemeint, realisiert durch das Trennkontaktsystem MK. Mit Trennfunktion sind die Punkte:

- Mindestluftstrecke nach Norm (Mindestabstand der Kontakte),
- Kontaktstellungsanzeige der Kontakte des mechanischen Trennkontaktsystem,
- Betätigung des mechanischen Trennkontaktsystem immer möglich (keine Blockierung des Trennkontaktsystems),

gemeint.

Hinsichtlich der Mindestluftstrecke zwischen den Kontakten des Trennkontaktsystem ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist das Trennkontaktsystem bzw. Schutzschaltgerät eine Trennfunktion (Trennereigenschaft) auf.

Im Sinne der Erfindung sind hierbei für die Trennerfunktion und deren Eigenschaften der Normenreihe DIN EN 60947 bzw. IEC 60947 einschlägig, auf die hier durch Referenz Bezug genommen wird.

Das Trennkontaktsystem ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:

**E DIN EN 60947-1 (VDE 0660-100):2018-06**

**Tabelle 13 - Mindestluftstrecken**

| Bemessungsstoßspannungsfestigkeit $U_{imp}$ kV | Mindestluftstrecken mm | | | | | | | |
|---|---|---|---|---|---|---|---|---|
| | Fall A Inhomogenes Feld (siehe 3.7.63) | | | | Fall B homogenes Feld, ideale Bedingungen (siehe 3.7.62) | | | |
| | Verschmutzungsgrad | | | | Verschmutzungsgrad | | | |
| | 1 | 2 | 3 | 4 | 1 | 2 | 3 | 4 |
| 0,33 | 0,01 | | | | 0,01 | | | |
| 0,5 | 0,04 | 0,2 | | | 0,04 | 0,2 | | |
| 0,8 | 0,1 | | 0,8 | | 0,1 | | 0,8 | 1,6 |
| 1,5 | 0,5 | 0,5 | | 1,6 | 0,3 | 0,3 | | |
| 2,5 | 1,5 | 1,5 | 1,5 | | 0,6 | 0,6 | | |
| 4,0 | 3 | 3 | 3 | 3 | 1,2 | 1,2 | 1,2 | |
| 6,0 | 5,5 | 5,5 | 5,5 | 5,5 | 2 | 2 | 2 | 2 |
| 8,0 | 8 | 8 | 8 | 8 | 3 | 3 | 3 | 3 |
| 12 | 14 | 14 | 14 | 14 | 4,5 | 4,5 | 4,5 | 4,5 |
| ANMERKUNG Die angegebenen kleinsten Luftstrecken beruhen auf der 1,2/50-$\mu$s-Stoßspannung bei einem Luftdruck von 80 kPa, was dem Luftdruck bei 2 000 m über NN entspricht. | | | | | | | | |

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

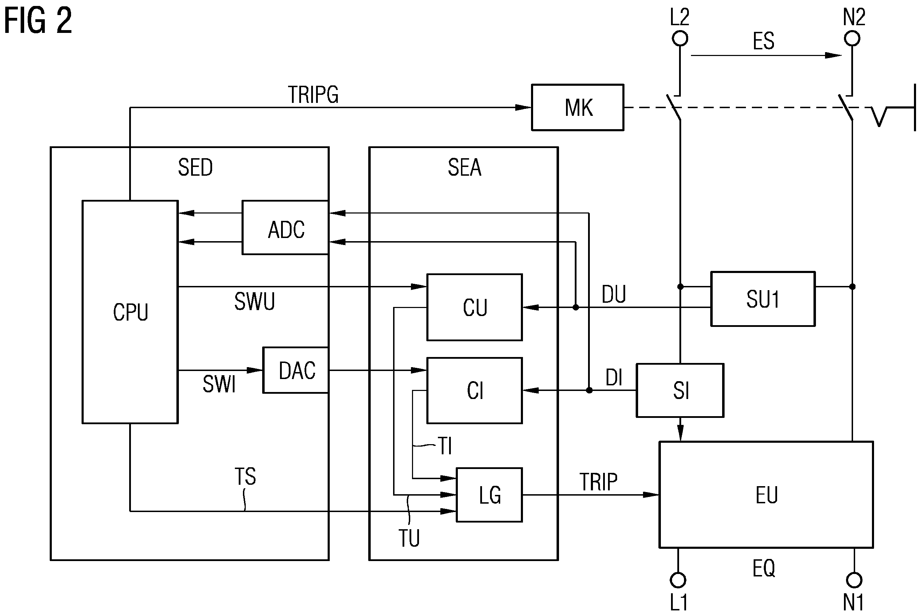

Figur 2 zeigt eine Darstellung gemäß Figur 1, mit einer weiteren detaillierten Ausgestaltung und Unterschieden. Im Beispiel gemäß Figur 2 ist die mechanische Trennkontakteinheit MK den zweiten, lastseitigen Anschlüssen L2, N2 bzw. der Lastseite / Verbraucherseite ES zugeordnet. Die elektronische Unterbrechungseinheit EU ist den ersten Anschlüsse L1, N1 des netzseitigen, insbesondere energiequellenseitigen, Anschlusses EQ zugeordnet. D.h. die die ersten und zweiten Anschlüsse verbindende Serienschaltung einer mechanischen Trennkontakteinheit MK und einer elektronischen Unterbrechungseinheit EU ist gegenüber Figur 1 vertauscht. Gemäß Figur 2 ist die mechanische Trennkontakteinheit MK den lastseitigen Anschlüssen und die elektronische Unterbrechungseinheit EU den netzseitigen Anschlüssen zugeordnet. Eine Energieversorgung für das Schutzschaltgerät kann vorteilhaft von den netzseitigen Anschlüssen her erfolgen. So wird das Schutzschaltgerät im Regelfall mit Energie versorgt.

Gemäß Figur 2 weist die Steuerungseinheit SE zwei Teileinheiten auf, eine, bevorzugt analoge, erste Teileinheit SEA und eine, bevorzugt digitale, zweite Teileinheit SED. Die erste Teileinheit SEA weist hierbei einen (Strom-) Komparator CI auf. Diesem werden einerseits die momentanen Strom(änderungs)werte DI des Stromsensors SI zugeführt. Andererseits werden dem Stromkomparator CI die momentanen Strom(änderungs)schwellwerte SWI von der zweiten Teileinheit SED zugeführt.

Der Stromkomparator CI vergleicht die momentanen Strom(änderungs)werte DI mit den momentanen Strom(änderungs)schwellwerten SWI und gibt, wie beschrieben, bei Überschreitung, ein erstes Stromunterbrechungssignal TI, zur Initiierung einer Unterbrechung des Niederspannungsstromkreises, ab.

Das Stromunterbrechungssignal TI kann einer Logikeinheit LG zugeführt werden, die es mit anderen Unterbrechungssignalen kombiniert und das erste Unterbrechungssignal TRIP zur halbleiterbasierten Unterbrechung bzw. hochohmigen Unterbrechung an die elektronische Unterbrechungseinheit EU abgibt.

In einer Ausgestaltung speichert der Stromkomparator CI die momentanen Schwellwerte SWI zwischen, um die Werte ständig zur Verfügung zu haben.

Wobei die momentanen Strom(änderungs)schwellwerte SWI mit dem zeitlichen Verlauf der momentanen Spannungswerte (dem zeitlichen Verlauf der Spannung) synchronisiert sind. Dadurch werden bei kleiner momentaner Spannung (Phasenwinkel einer sinusförmigen Wechselspannung von z.B. -30° bis 0° bis 30°) kleine momentane Strom(änderungs)schwellwerte SWI verwendet (bzw. liegen vor) und bei hoher momentaner Spannung (Phasenwinkel einer sinusförmigen Wechselspannung von z.B. 60° bis 90° bis 120°) hohe Strom(änderungs)schwellwerte SWI verwendet (bzw. liegen vor), so dass die Auslösezeit weitestgehend unabhängig vom Phasenwinkel der Spannung ist, so dass die Auslösezeit unter dem zeitlich ersten Schwellwert liegt.

Die momentanen Strom(änderungs)werte / Stromwerte DI werden zudem der zweiten Teileinheit SED zugeführt. In einer bevorzugten Ausgestaltung werden die momentanen Stromwerte DI dort durch einen Analog-Digital-Umsetzer ADC digitalisiert und einem Mikroprozessor CPU zugeführt. Dieser führte eine Ermittlung bzw. Berechnung der momentanen Strom(änderungs)schwellwerte SWI durch. Die durch die zweite Teileinheit SED bzw. insbesondere den Mikroprozessor CPU ermittelten momentanen Strom(änderungs)schwellwerte SWI werden wiederum der ersten Teileinheit SEA zugeführt, insbesondere dem Stromkomparator CI, um den oben beschriebenen Vergleich durchzuführen.

Dabei kann vorteilhaft die Ermittlung der momentanen Strom(änderungs)schwellwerte SWI in der zweiten Teileinheit SED digital erfolgen bzw. mit einer langsameren Verarbeitungsgeschwindigkeit als der fortlaufende Vergleich von momentanen Strom(änderungs)werte DI mit den momentanen Strom(änderungs)schwellwerte SWI in der ersten Teileinheit SEA.

In einer vorteilhaften Ausgestaltung der Erfindung kann die erste Teileinheit SEA einen Spannungskomparator CU aufweisen. Diesem werden einerseits die momentanen Spannungswerte DU des Spannungssensors SU zugeführt. Andererseits werden dem Spannungskomparator CU momentane Spannungsschwellwerte SWU von der zweiten Teileinheit SED zugeführt.

Der Spannungskomparator CU vergleicht die momentanen Spannungswerte DU mit den momentanen Spannungsschwellwerten SWU und gibt bei Überschreitung oder Unterschreitung bzw. Bereichsprüfung ein Spannungsunterbrechungssignal TU zur Initiierung einer Unterbrechung des Niederspannungsstromkreises ab.

Das Spannungsunterbrechungssignal TU kann der Logikeinheit LG zugeführt werden, die es mit dem(n) (anderen) Unterbrechungssignal(en) kombiniert und das erste Unterbrechungssignal TRIP zur halbleiterbasierten Unterbrechung bzw. hochohmigen Unterbrechung an die elektronische Unterbrechungseinheit EU abgibt.

In einer Ausgestaltung speichert der Spannungskomparator CU die momentanen Schwellwerte SWU zwischen, um die Werte ständig zur Verfügung zu haben.

In dieser Ausgestaltung können die momentanen Spannungswerte DU zudem der zweiten Teileinheit SED zugeführt werden. In einer weiteren bevorzugten Ausgestaltung werden die momentanen Spannungswerte DU dort durch den Analog-Digital-Umsetzer ADC digitalisiert und dem Mikroprozessor CPU zugeführt. Dieser führt eine Ermittlung bzw. Berechnung der momentanen Spannungsschwellwerte SWU durch. Die durch die zweite Teileinheit SED bzw. insbesondere den Mikroprozessor CPU ermittelten momentanen Spannungsschwellwerte SWU werden wiederum der ersten Teileinheit SEA zugeführt, insbesondere dem Spannungskomparator CU, um den oben beschriebenen Vergleich durchzuführen.

Dabei kann vorteilhaft die Ermittlung der momentanen Spannungsschwellwerte SWU in der zweiten Teileinheit SED digital erfolgen bzw. mit einer langsameren Verarbeitungsgeschwindigkeit als der fortlaufende Vergleich von momentanen Spannungswerten DU und momentanen Spannungsschwellwerten SWU in der ersten Teileinheit SEA.

Je nach Ausgestaltung kann ein zweites Unterbrechungssignal TRIPG von der zweiten Teileinheit SED der Steuerungseinheit SE, insbesondere vom Mikroprozessor CPU, zur galvanischen Unterbrechung des Niederspannungsstromkreises an das mechanische Trennkontaktsystem MK abgegeben werden, wie in Figur 2 eingezeichnet.

Die Ausgestaltung der Steuerungseinheit mit einer analogen ersten Teileinheit und eine digitale zweiten Teileinheit hat den besonderen Vorteil, dass eine effiziente Architektur vorliegt. Die erste analoge Teileinheit kann einen sehr schnellen Vergleich von momentanen Werten und Schwellwerten durchführen, wodurch eine schnelle Kurzschlusserkennung möglich ist. Die zweite Teileinheit kann eine davon unabhängige Schwellwertberechnung bzw. Anpassung durchführen, die nicht so schnell wie die Erkennung durchgeführt werden muss. Die Schwellwerte können beispielsweise zwischengespeichert werden, um für einen schnellen Vergleich zur Verfügung zu stehen. Die Schwellwerte müssen nicht ständig angepasst werden.

Durch die Kombination von Stromwerten oder Stromänderungswerten und Spannungswerten kann zudem eine höhere Auswertesicherheit erreicht werden.

Erfindungsgemäß ist das Schutzschaltgerät derart ausgestaltet, dass bei hochohmig geschalteter elektronischer Unterbrechungseinheit EU der Strom weiter überwacht wird. Dies kann durch eine Anpassung der Stromschwellwerte SWI erfolgen. D.h. der Stromschwellwert SWI wird dann auf den ersten Fehlerstromschwellwert eingestellt. D.h. der Stromwert DI wird dann mit dem (niedrigeren) Stromschwellwert SWI (erster Fehlerstromschwellwert, beispielsweise 30 mA) verglichen. Alternativ können für diesen Fall die Stromwerte auch durch die digitale zweite Teileinheit SED ausgewertet werden.

Bei Überschreitung des ersten Fehlerstromschwellwertes wird ein Öffnen von Kontakten der mechanischen Trennkontakteinheit (MK) initiiert (über einen weiteren Anschluss von der ersten Teileinheit SEA bzw. dessen (Strom-) Komparator CI [nicht eingezeichnet], oder durch die zweite Teileinheit SED).

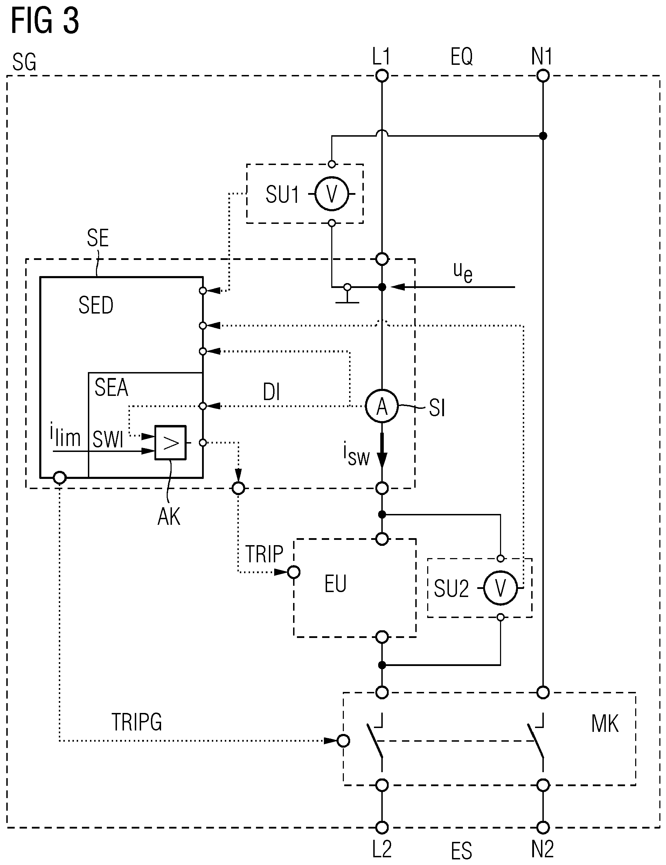

Figur 3 zeigt eine Darstellung gemäß Figur 1 und 2. Die die ersten und die zweiten Anschlüsse elektrisch verbindende Serienschaltung einer mechanischen Trennkontakteinheit MK und einer elektronischen Unterbrechungseinheit EU ist gemäß Figur 2 vorgesehen, dass die ersten Anschlüsse L1, N1 netzseitige Anschlüsse und die zweiten Anschlüsse L2, N2 lastseitige Anschlüsse sind, wobei die mechanische Trennkontakteinheit MK den lastseitigen Anschlüssen und die elektronische Unterbrechungseinheit EU den netzseitigen Anschlüssen zugeordnet ist. Die Steuerungseinheit SE ist mit der ersten Teileinheit SEA und der zweiten Teileinheit SED angedeutet.

Figur 3 zeigt den Unterschied, dass eine mit der Steuerungseinheit verbundene zweite Spannungssensoreinheit SU2 vorgesehen ist, zur Ermittlung der Höhe der Spannung über der elektronischen Unterbrechungseinheit. Die zweite Spannungssensoreinheit SU2 ermittelt die Höhe der Spannung über der elektronischen Unterbrechungseinheit eines Leiters der elektronischen Unterbrechungseinheit. Im Beispiel (bevorzugt) im Phasenleiter.

Die Höhe der Spannung wird mit einem Spannungsschwellwert verglichen wird und bei Überschreitung des Spannungsschwellwertes wird eine Überprüfung auf Überschreitung des ersten Fehlerstromschwellwertes für eine zweite Zeitdauer ausgesetzt.

Die zweite Zeitdauer ist kleiner als 10 ms.

Der Spannungsschwellwert ist größer als die Amplitude der Netzspannung des Niederspannungsstromkreises ist, insbesondere höher als der einer erhöhten (z.B. +10 %) Netzspannung, dass insbesondere eine erhöhte Netzspannung eine Spannung von mehr als 10% über der Amplitude der Netzspannung ist, bezogen auf Amplitude der Netzspannung.

Der Spannungsschwellwert sollte kleiner als die Spannungsfestigkeit der eingesetzten halbleiterbasierten Schaltelemente der elektronischen Unterbrechungseinheit EU gewählt werden.

Am Schutzschaltgerät kann eine in den Figuren nicht dargestellte, mit der Steuerungseinheit SE verbundene, Kommunikationseinheit vorgesehen sein. Wie z.B. ein Kommunikationsmodul mit WLAN Möglichkeit. Das Schutzschaltgerät ist derart ausgestaltet, dass bei hochohmiger bzw. hochohmig geschalteter elektronischer Unterbrechungseinheit EU und einem Strom im Niederspannungsstromkreis, der den ersten Fehlerstromschwellwert überschreitet, eine Information mittels der Kommunikationseinheit signalisiert wird.

Am Schutzschaltgerät kann eine in den Figuren nicht dargestellte, mit der Steuerungseinheit SE verbundene, Anzeigeeinheit mit einer Informationsanzeige, wie z.B. LED, Segmentanzeige, Display etc., am Schutzschaltgerät vorgesehen sein. Das Schutzschaltgerät ist derart ausgestaltet, dass bei hochohmiger bzw. hochohmig geschalteter elektronischer Unterbrechungseinheit EU und einem Strom im Niederspannungsstromkreis, der den ersten Fehlerstromschwellwert überschreitet, eine Informationsanzeige erfolgt.

Erfindungsgemäß kann bei geschlossenen Kontakten der mechanischen Trennkontakteinheit MK und hochohmig werden der elektronischen Unterbrechungseinheit EU eine Überprüfung auf Überschreitung des ersten Fehlerstromschwellwertes nach einer ersten Zeitgrenze durchgeführt wird, d.h. zeitlich ausgesetzt werden, insbesondere nach einer ersten Zeitgrenze von mindestens 50 µs, spezieller nach 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs oder 1ms.

Erfindungsgemäß kann die Überschreitung des ersten Fehlerstromschwellwertes erst für eine erste Zeitdauer vorliegen, um eine Öffnung der Kontakte, eine Signalisierung der Information bzw. eine Informationsanzeige zu bewirken. Die erste Zeitdauer kann abhängig von der Höhe des ermittelten Stromes sein. Die erste Zeitdauer kann mindestens 50µs, insbesondere größer als 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs oder 1 ms sein. Die erste Zeitdauer kann maximal 5 ms betragen.

Die Steuerung der Überwachung kann durch Software bzw. Firmware, d.h. ein Computerprogrammprodukt, für die Steuerungseinheit bzw. die zweite Teileinheit bzw. dessen Mikrocontroller (= Mikroprozessor) zumindest teilweise mit realisiert sein.

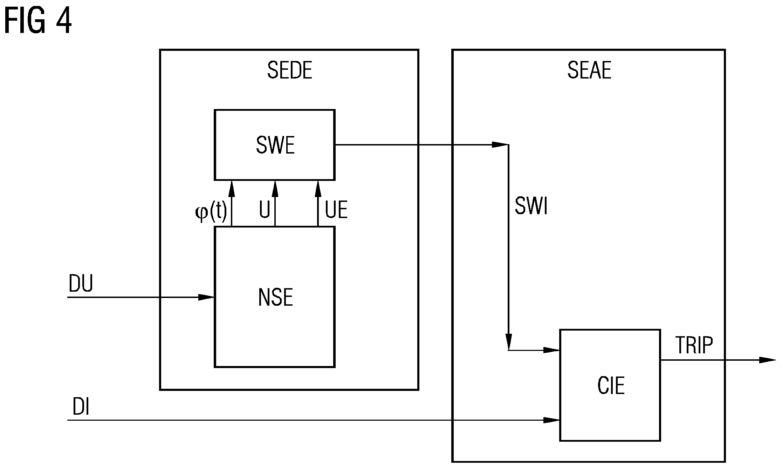

Figur 4 zeigt eine weitere Ausgestaltung bzw. Variante gemäß der Figuren 1, 2 und 3. Figur 4 zeigt einen Teil einer einfachen Variante der, bevorzugt analogen, ersten Teileinheit SEAE und einen Teil einer alternative Variante der, bevorzug digitalen, zweiten Teileinheit SEDE auf.

Der Teil der einfachen Variante der ersten Teileinheit SEAE weist den Stromkomparator CIE auf, dem die momentanen Stromwerte DI, insbesondere deren Betrag, und die momentanen Stromschwellwerte SWI, insbesondere ebenso betragsbezogen, zugeführt werden. Der Stromkomparator CIE gibt in diesem Beispiel direkt das erste Unterbrechungssignal TRIP zur Unterbrechung des Niederspannungsstromkreises ab, analog zu den vorherigen Figuren. Die Betragsbildung kann durch eine oder weitere, nicht dargestellte Einheiten erfolgen.

Der Teil der alternativen Variante der zweiten Teileinheit SEDE weist eine Netzsynchronisationseinheit NSE auf. Dieser werden die (analogen) momentanen Spannungswerte DU zugeführt. Die Netzsynchronisationseinheit NSE ermittelt aus den zugeführten (analogen) momentanen Spannungswerte DU, die z.B. eine sinusförmige Wechselspannung des Niederspannungsstromkreises sind, den Phasenwinkel $\varphi(t)$ der Spannung.

Alternativ kann zusätzlich noch die Amplitude U und ein erwarteter Zeitwert der Spannung UE respektive Erwartungswert der Spannung UE ermittelt werden.

Der Erwartungswert der Spannung UE ist hierbei eine Art gefilterter bzw. regenerierter bzw. erzeugter äquivalenter momentaner Spannungswert DU.

Der Phasenwinkel $\varphi(t)$ (als auch der Erwartungswert der Spannung UE bzw. die Amplitude U) der Spannung DU können beispielsweise durch eine so genannte Phase Locked Loop respektive Phasenregelschleife, kurz PLL, ermittelt werden. Eine PLL ist eine elektronische Schaltungsanordnung, die die Phasenlage und damit zusammenhängend die Frequenz eines veränderbaren Oszillators über einen geschlossenen Regelkreis so beeinflusst, dass die Phasenabweichung zwischen einem äußeren periodischen Referenzsignal (momentane Spannungswerte) und dem Oszillator oder einem daraus abgeleiteten Signal möglichst konstant ist. Eine Phasenregelschleife kann auch als Software für einen Mikrocontroller programmiert sein (im Rahmen des Computerprogrammprodukts).

Damit kann u.a. der Phasenwinkel $\varphi(t)$, die Grundfrequenz und deren Amplitude der zugeführten Netzspannung, d.h. der ermittelten Spannungswerte, ermittelt werden, d.h. z.B. auch der (ungestörte bzw. gefilterte) Erwartungswert der (Netz-)Spannung.

Der von der Netzsynchronisationseinheit NSE ermittelte Phasenwinkel $\varphi(t)$ (und eventuell die Amplitude U oder/und der erwartete Zeitwert der Spannung UE) werden einer Schwellwerteinheit SWE zugeführt. Die Schwellwerteinheit SWE kann eine (skalierte) Kurve für die (phasenbezogenen) momentanen Stromschwellwerte SWI aufweisen. Beispielsweise bei einer sinusförmigen Wechselspannung des Niederspannungsstromkreis eine (annähernd) sinusförmige Stromschwellwertkurve, d.h. einen in der Höhe sinusförmigen Verlauf der momentanen Stromschwellwerte SWI über den Phasenwinkel 0° bis 360° respektive der Periodendauer (bzw. der (korrespondierenden) Zeit).

Das Schutzschaltgerät SG kann ein, insbesondere einziges, Einstellelement aufweisen. Mit diesem, insbesondere einzigen Einstellelement am Schutzschaltgerät SG, kann ein Grenzwert für den Stromschwellwert oder den Stromanstieg einstellbar sein. Alternativ kann der Grenzwert für den Stromschwellwert auch fest vorgeben bzw. programmiert sein.

Erfindungsgemäß wird dann die Stromschwellwertkurve hinsichtlich dieses mittels des Einstellelementes eingestellten bzw. fest vorgegebenen Grenzwertes für den Stromschwellwert skaliert. Beispielsweise kann die Amplitude (d.h. der Maximalwert) der Stromschwellwertkurve mit dem Grenzwert für den Stromschwellwert skaliert werden.

Die momentanen Stromschwellwerte SWI können durch das Vorliegen des Phasenwinkels $\varphi(t)$ der Spannung in der Schwellwerteinheit SWE von dieser synchron zum momentanen Stromwert DI an den Stromkomparator CIE übermittelt werden, so dass ein phasenbezogener (phasenwinkelbezogener) Vergleich zwischen momentanen Stromwert DI und momentanen Stromschwellwert SWI erfolgen kann.

Die Stromschwellwerte können auch (skaliert) in einer Tabelle abgelegt sein, wobei dann der Wert ggfs. angepasst wird.

Für den regulären Betrieb und Vermeidung eines Stromflusses des Niederspannungsstromkreises durch Prüfung auf Überschreitung der Höhe des Stromes über mindestens einen Stromschwellwert kann die erfindungsgemäße Steuerungseinheit, insbesondere mit den beiden Teileinheiten verwendet werden, um die elektronische Unterbrechungseinheit hochohmig zu schalten. Der Stromschwellwert kann fest oder erfindungsgemäß angepasst werden (momentane Stromschwellwerte).

Für die Erkennung eines Stromes bei hochohmiger bzw. hochohmig geschalteter elektronischer Unterbrechungseinheit EU ist nur ein (fester) erster Fehlerstromschwellwert erforderlich. Es wird hier nur ein Teil der erfindungsgemäßen Steuerungseinheit benötigt. Die Erkennung kann auch anderweitig erfolgen.

## Patentansprüche

1. Schutzschaltgerät (SG) zum Schutz eines elektrischen Niederspannungsstromkreis aufweisend:

   - ein Gehäuse (GEH), mit ersten (L1, N1) und zweiten (L2, N2) Anschlüssen für Leiter des Niederspannungsstromkreises,
   - eine die ersten und die zweiten Anschlüsse elektrisch verbindende Serienschaltung einer mechanischen Trennkontakteinheit (MK) und einer elektronischen Unterbrechungseinheit (EU),

- wobei die mechanische Trennkontakteinheit (MK) durch ein Öffnen von Kontakten zur Vermeidung eines Stromflusses oder ein Schließen der Kontakte für einen Stromfluss im Niederspannungsstromkreis schaltbar ist,
- wobei die elektronische Unterbrechungseinheit (EU) durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- einer Stromsensoreinheit (SI), zur Ermittlung der Höhe des Stromes des Niederspannungsstromkreises, derart das momentane Stromwerte vorliegen,
- einer Steuerungseinheit (SE), die mit der Stromsensoreinheit (SI), der mechanischen Trennkontakteinheit (MK) und der elektronischen Unterbrechungseinheit (EU) verbunden ist, wobei bei Überschreitung der Höhe des Stromes über mindestens einen Stromschwellwert eine Vermeidung eines Stromflusses des Niederspannungsstromkreises durch hochohmig schalten der elektronischen Unterbrechungseinheit (EU) initiiert wird,

**dadurch gekennzeichnet, dass** das Schutzschaltgerät derart ausgestaltet ist, dass bei hochohmiger bzw. hochohmig geschalteter elektronischer Unterbrechungseinheit (EU) und einem Strom im Niederspannungsstromkreis, der einen ersten Fehlerstromschwellwert überschreitet, ein Öffnen von Kontakten der mechanischen Trennkontakteinheit (MK) initiiert wird.

2. Schutzschaltgerät (SG) nach Patentanspruch 1,
   **dadurch gekennzeichnet,**

   **dass** die ersten Anschlüsse (L1, N1) netzseitige Anschlüsse und die zweiten Anschlüsse (L2, N2) lastseitige Anschlüsse sind,
   **dass** die mechanische Trennkontakteinheit (MK) den lastseitigen Anschlüssen und die elektronische Unterbrechungseinheit (EU) den netzseitigen Anschlüssen zugeordnet ist.

3. Schutzschaltgerät (SG) nach einem der vorhergehenden Patentansprüche,
   **dadurch gekennzeichnet,**

   **dass** eine mit der Steuerungseinheit (SE) verbundene Kommunikationseinheit vorgesehen ist,
   **dass** das Schutzschaltgerät derart ausgestaltet ist, dass bei hochohmiger bzw. hochohmig geschalteter elektronischer Unterbrechungseinheit (EU) und einem Strom im Niederspannungsstromkreis, der den ersten Fehlerstromschwellwert überschreitet, eine Information mittels der Kommunikationseinheit signalisiert wird.

4. Schutzschaltgerät (SG) nach einem der vorhergehenden Patentansprüche,
   **dadurch gekennzeichnet,**

   **dass** eine mit der Steuerungseinheit (SE) verbundene Anzeigeeinheit mit einer Informationsanzeige am Schutzschaltgerät vorgesehen ist,
   **dass** das Schutzschaltgerät derart ausgestaltet ist, dass bei hochohmiger bzw. hochohmig geschalteter elektronischer Unterbrechungseinheit (EU) und einem Strom im Niederspannungsstromkreis, der den ersten Fehlerstromschwellwert überschreitet, eine Informationsanzeige erfolgt.

5. Schutzschaltgerät (SG) nach einem der vorhergehenden Patentansprüche,
   **dadurch gekennzeichnet,**
   **dass** der erste Fehlerstromschwellwert im Bereich 30 mA, 6 mA oder 300 mA liegt, spezieller im Bereich 26 bis 30 mA, 4 bis 6 mA oder 290 bis 300 mA.

6. Schutzschaltgerät (SG) nach einem der vorhergehenden Patentansprüche,
   **dadurch gekennzeichnet,**

   **dass** bei geschlossenen Kontakten der mechanischen Trennkontakteinheit (MK) und hochohmig werden der elektronischen Unterbrechungseinheit (EU) eine Überprüfung auf Überschreitung des ersten Fehlerstromschwellwertes nach einer ersten Zeitgrenze durchgeführt wird,
   insbesondere nach einer ersten Zeitgrenze von mindestens 50 µs, spezieller nach 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs oder 1ms.

**7.** Schutzschaltgerät (SG) nach einem der vorhergehenden Patentansprüche,
**dadurch gekennzeichnet,**
**dass** die Überschreitung des ersten Fehlerstromschwellwertes für eine erste Zeitdauer vorliegen muss, um eine Öffnung der Kontakte, eine Signalisierung der Information bzw. eine Informationsanzeige zu bewirken.

**8.** Schutzschaltgerät (SG) nach Patentanspruch 7,
**dadurch gekennzeichnet,**
**dass** die erste Zeitdauer abhängig von der Höhe des ermittelten Stromes ist.

**9.** Schutzschaltgerät (SG) nach Patentanspruch 7 oder 8, **dadurch gekennzeichnet,**
**dass** die erste Zeitdauer mindestens $50\,\mu$s ist, insbesondere größer als $100\,\mu$s, $150\,\mu$s, $200\,\mu$s, $250\,\mu$s, $300\,\mu$s, $350\,\mu$s, $400\,\mu$s, $450\,\mu$s, $500\,\mu$s, $550\,\mu$s, $600\,\mu$s, $650\,\mu$s, $700\,\mu$s, $750\,\mu$s, $800\,\mu$s, $850\,\mu$s, $900\,\mu$s, $950\,\mu$s oder 1 ms ist.

**10.** Schutzschaltgerät (SG) nach Patentanspruch 7, 8 oder 9, **dadurch gekennzeichnet,**
**dass** die erste Zeitdauer maximal 5 ms beträgt.

**11.** Schutzschaltgerät (SG) nach einem der vorhergehenden Patentansprüche,
**dadurch gekennzeichnet,**

**dass** eine mit der Steuerungseinheit verbundene zweite Spannungssensoreinheit (SU2) vorgesehen ist, zur Ermittlung der Höhe der Spannung über der elektronischen Unterbrechungseinheit eines Leiters,
**dass** die Höhe der Spannung mit einem Spannungsschwellwert verglichen wird und bei Überschreitung des Spannungsschwellwertes eine Überprüfung auf Überschreitung des ersten Fehlerstromschwellwertes für eine zweite Zeitdauer ausgesetzt wird.

**12.** Schutzschaltgerät (SG) nach Patentanspruch 11,
**dadurch gekennzeichnet,**
**dass** die zweite Zeitdauer kleiner als 10 ms ist.

**13.** Schutzschaltgerät (SG) nach Patentanspruch 11 oder 12, **dadurch gekennzeichnet,**

**dass** der Spannungsschwellwert größer als die Amplitude der Netzspannung des Niederspannungsstromkreises ist, insbesondere höher als der einer erhöhten Netzspannung,
**dass** insbesondere eine erhöhte Netzspannung eine Spannung von mehr als 10% über der Amplitude der Netzspannung ist, bezogen auf Amplitude der Netzspannung.

**14.** Schutzschaltgerät (SG) nach Patentanspruch 11, 12 oder 13,
**dadurch gekennzeichnet,**
**dass** der Spannungsschwellwert kleiner als die Spannungsfestigkeit der eingesetzten halbleiterbasierten Schaltelemente der elektronischen Unterbrechungseinheit (EU) ist.

**15.** Verfahren zum Schutz eines elektrischen Niederspannungsstromkreis für ein Schutzschaltgerät, bei dem:
eine mechanisch Trennkontakteinheit (MK) in Serie mit einer elektronischen Unterbrechungseinheit (EU) geschaltet ist,

- die mechanische Trennkontakteinheit (MK) durch ein Öffnen von Kontakten zur Vermeidung eines Stromflusses oder ein Schließen der Kontakte für einen Stromfluss im Niederspannungsstromkreis schaltbar ist,
- die elektronische Unterbrechungseinheit (EU) durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- die Höhe des Stromes im Niederspannungsstromkreises ermittelt wird und bei Überschreitung der Höhe des Stromes über mindestens einen Stromschwellwert eine Vermeidung eines Stromflusses des Niederspannungsstromkreises durch hochohmig schalten der elektronischen Unterbrechungseinheit (EU) initiiert wird,
- dass bei hochohmiger bzw. hochohmig geschalteter elektronischer Unterbrechungseinheit (EU) weiterhin die Höhe des Stromes im Niederspannungsstromkreis ermittelt wird und bei Überschreitung eines ersten Fehlerstromschwellwertes ein Öffnen der Kontakten der mechanischen Trennkontakteinheit (MK) initiiert wird.

**16.** Verfahren nach Patentanspruch 15,

**dadurch gekennzeichnet,**
**dass** bei Überschreitung des ersten Fehlerstromschwellwertes eine Information signalisiert wird.

17. Verfahren nach Patentanspruch 15 oder 16,
**dadurch gekennzeichnet,**
**dass** bei geschlossenen Kontakten der mechanischen Trennkontakteinheit (MK) und hochohmig werden der elektronischen Unterbrechungseinheit (EU) eine Überprüfung auf Überschreitung des ersten Fehlerstromschwellwertes nach einer ersten Zeitgrenze durchgeführt wird.

18. Verfahren nach Patentanspruch 15, 16 oder 17,
**dadurch gekennzeichnet,**
**dass** die Überschreitung des ersten Fehlerstromschwellwertes für eine erste Zeitdauer vorliegen muss, um eine Öffnung der Kontakte, eine Signalisierung der Information bzw. eine Informationsanzeige zu bewirken.

19. Computerprogrammprodukt umfassend Befehle, die bei der Ausführung des Programms durch einen Mikrocontroller diesen veranlassen die Verfahrensschritte eines Schutzschaltgerätes gemäß einem der Patentansprüche 1 bis 18 zu unterstützen, insbesondere durchzuführen.

20. Computerlesbares Speichermedium, auf dem das Computerprogrammprodukt nach Patentanspruch 19 gespeichert ist.

21. Datenträgersignal, das das Computerprogrammprodukt nach Patentanspruch 19 überträgt.

**Claims**

1. Protective switching device (SG) for protecting an electrical low-voltage circuit, having:

   - a housing (GEH) having first (L1, N1) and second (L2, N2) connections for conductors of the low-voltage circuit,
   - a series circuit of a mechanical isolating contact unit (MK) and an electronic interruption unit (EU), which series circuit electrically connects the first and second connections,
   - wherein the mechanical isolating contact unit (MK) can be switched by opening contacts in order to avoid a current flow or closing the contacts for a current flow in the low-voltage circuit,
   - wherein the electronic interruption unit (EU) can be switched, by means of semiconductor-based switching elements, into a high-impedance state of the switching elements in order to avoid a current flow or into a low-impedance state of the switching elements for the current flow in the low-voltage circuit,
   - a current sensor unit (SI) for determining the level of the current of the low-voltage circuit in such a manner that instantaneous current values are available,
   - a control unit (SE) which is connected to the current sensor unit (SI), the mechanical isolating contact unit (MK) and the electronic interruption unit (EU),
   wherein, if the level of the current exceeds at least one current threshold value, avoidance of a current flow in the low-voltage circuit is initiated by switching the electronic interruption unit (EU) to high impedance,
   **characterized in that**
   the protective switching device is configured in such a manner that, in the case of a high-impedance electronic interruption unit (EU), or an electronic interruption unit that has been switched to high impedance, and a current in the low-voltage circuit that exceeds a first fault current threshold value, opening of contacts of the mechanical isolating contact unit (MK) is initiated.

2. Protective switching device (SG) according to Patent Claim 1,
**characterized**
**in that** the first connections (L1, N1) are grid-side connections and the second connections (L2, N2) are load-side connections, in that the mechanical isolating contact unit (MK) is assigned to the load-side connections and the electronic interruption unit (EU) is assigned to the grid-side connections.

3. Protective switching device (SG) according to one of the preceding patent claims,
**characterized**

   **in that** a communication unit connected to the control unit (SE) is provided,

**in that** the protective switching device is configured in such a manner that, in the case of a high-impedance electronic interruption unit (EU), or an electronic interruption unit that has been switched to high impedance, and a current in the low-voltage circuit that exceeds the first fault current threshold value, information is signalled using the communication unit.

4. Protective switching device (SG) according to one of the preceding patent claims, **characterized**

   **in that** a display unit which is connected to the control unit (SE) and has an information display is provided on the protective switching device,
   **in that** the protective switching device is configured in such a manner that, in the case of a high-impedance electronic interruption unit (EU), or an electronic interruption unit that has been switched to high impedance, and a current in the low-voltage circuit that exceeds the first fault current threshold value, information is displayed.

5. Protective switching device (SG) according to one of the preceding patent claims, **characterized**
   **in that** the first fault current threshold value is in the region of 30 mA, 6 mA or 300 mA, more specifically in the range of 26 to 30 mA, 4 to 6 mA or 290 to 300 mA.

6. Protective switching device (SG) according to one of the preceding patent claims, **characterized**

   **in that**, when contacts of the mechanical isolating contact unit (MK) are closed and the electronic interruption unit (EU) comes to have a high impedance, a check for the first fault current threshold value being exceeded is carried out after a first time limit,
   in particular after a first time limit of at least 50 μs, more specifically after 100 μs, 150 μs, 200 μs, 250 μs, 300 μs, 350 μs, 400 μs, 450 μs, 500 μs, 550 μs, 600 μs, 650 μs, 700 μs, 750 μs, 800 μs, 850 μs, 900 μs, 950 μs or 1 ms.

7. Protective switching device (SG) according to one of the preceding patent claims, **characterized**
   **in that** the first fault current threshold value must be exceeded for a first period in order to cause opening of the contacts, signalling of the information or a display of information.

8. Protective switching device (SG) according to Patent Claim 7, **characterized**
   **in that** the first period is dependent on the level of the determined current.

9. Protective switching device (SG) according to Patent Claim 7 or 8, **characterized**
   **in that** the first period is at least 50 μs, in particular greater than 100 μs, 150 μs, 200 μs, 250 μs, 300 μs, 350 μs, 400 μs, 450 μs, 500 μs, 550 μs, 600 μs, 650 μs, 700 μs, 750 μs, 800 μs, 850 μs, 900 μs, 950 μs or 1 ms.

10. Protective switching device (SG) according to Patent Claim 7, 8 or 9, **characterized**
    **in that** the first period is at most 5 ms.

11. Protective switching device (SG) according to one of the preceding patent claims, **characterized**

    **in that** a second voltage sensor unit (SU2) connected to the control unit is provided for the purpose of determining the level of the voltage across the electronic interruption unit of a conductor,
    **in that** the level of the voltage is compared with a voltage threshold value and a check for the first fault current threshold value being exceeded is suspended for a second period if the voltage threshold value is exceeded.

12. Protective switching device (SG) according to Patent Claim 11, **characterized**
    **in that** the second period is less than 10 ms.

**13.** Protective switching device (SG) according to Patent Claim 11 or 12,
**characterized**

**in that** the voltage threshold value is greater than the amplitude of the grid voltage of the low-voltage circuit, in particular higher than that of an elevated grid voltage,
**in that**, in particular, an elevated grid voltage is a voltage of more than 10% above the amplitude of the grid voltage, based on the amplitude of the grid voltage.

**14.** Protective switching device (SG) according to Patent Claim 11, 12 or 13,
**characterized**
**in that** the voltage threshold value is less than the dielectric strength of the semiconductor-based switching elements of the electronic interruption unit (EU) that are used.

**15.** Method for protecting an electrical low-voltage circuit for a protective switching device, in which:
a mechanical isolating contact unit (MK) is connected in series with an electronic interruption unit (EU),

- the mechanical isolating contact unit (MK) can be switched by opening contacts in order to avoid a current flow or closing the contacts for a current flow in the low-voltage circuit,
- the electronic interruption unit (EU) can be switched, by means of semiconductor-based switching elements, into a high-impedance state of the switching elements in order to avoid a current flow or into a low-impedance state of the switching elements for the current flow in the low-voltage circuit,
- the level of the current in the low-voltage circuit is determined and, if the level of the current exceeds at least one current threshold value, avoidance of a current flow in the low-voltage circuit is initiated by switching the electronic interruption unit (EU) to high impedance,
- in the case of a high-impedance electronic interruption unit (EU), or an electronic interruption unit that has been switched to high impedance, the level of the current in the low-voltage circuit is still determined and opening of the contacts of the mechanical isolating contact unit (MK) is initiated if a first fault current threshold value is exceeded.

**16.** Method according to Patent Claim 15,
**characterized**
**in that** information is signalled if the first fault current threshold value is exceeded.

**17.** Method according to Patent Claim 15 or 16,
**characterized**
**in that**, when contacts of the mechanical isolating contact unit (MK) are closed and the electronic interruption unit (EU) comes to have a high impedance, a check for the first fault current threshold value being exceeded is carried out after a first time limit.

**18.** Method according to Patent Claim 15, 16 or 17,
**characterized**
**in that** the first fault current threshold value must be exceeded for a first period in order to cause opening of the contacts, signalling of the information or a display of information.

**19.** Computer program product comprising instructions which, when the program is executed by a microcontroller, cause the latter to assist with, in particular carry out, the method steps of a protective switching device according to one of Patent Claims 1 to 18.

**20.** Computer-readable storage medium on which the computer program product according to Patent Claim 19 is stored.

**21.** Data carrier signal which transmits the computer program product according to Patent Claim 19.

**Revendications**

**1.** Disjoncteur (SG) pour la protection d'un circuit électrique basse tension présentant :

- un boîtier (GEH), avec des premiers (L1, N1) et des deuxièmes (L2, N2) raccordements pour des conducteurs du circuit électrique basse tension,

- une connexion en série reliant électriquement les premiers et les deuxièmes raccordements d'une unité de contact d'interruption mécanique (MK) et d'une unité de contact d'interruption électronique (EU),
- dans lequel l'unité de contact d'interruption mécanique (MK) peut être commutée par une ouverture de contacts afin d'éviter un flux de courant ou une fermeture des contacts pour un flux de courant dans le circuit électrique basse tension,
- dans lequel l'unité de coupure électronique (EU) peut être commutée par des éléments de commutation à base de semi-conducteurs dans un état à haute impédance des éléments de commutation afin d'éviter un flux de courant ou un état à basse impédance des éléments de commutation afin d'avoir un flux de courant dans le circuit électrique basse tension,
- une unité de capteur de courant (SI) pour déterminer le niveau du courant du circuit électrique basse tension d'une manière telle que des valeurs de courant momentanées existent,
- une unité de commande (SE) qui est reliée à l'unité de capteur de courant (SI), à l'unité de contact d'interruption mécanique (MK) et à l'unité de coupure électronique (EU) (EU), dans lequel en cas de dépassement du niveau du courant au-dessus d'au moins une valeur seuil de courant, est initiée une prévention d'un flux de courant du circuit électrique basse tension par commutation à haute impédance de l'unité de coupure électronique (EU),

**caractérisé en ce que** le disjoncteur est configuré d'une manière telle qu'avec une unité de coupure électronique (EU) à haute impédance resp. commutée à haute impédance et un courant dans le circuit électrique basse tension, qui dépasse une première valeur seuil de courant de fuite, est initiée une ouverture des contacts de l'unité de contact d'interruption mécanique (MK).

2.  Disjoncteur (SG) selon la revendication 1, **caractérisé en ce que** les premiers raccordements (L1, N1) sont des raccordements côté réseau et les deuxièmes raccordements (L2, N2) sont des raccordements côté charge,
    **en ce que** l'unité de contact d'interruption mécanique (MK) est affectée aux raccordements côté charge et l'unité de coupure électronique (EU) est affectée aux raccordements côté réseau.

3.  Disjoncteur (SG) selon l'une des revendications précédentes, **caractérisé en ce qu'**une unité de communication reliée à l'unité de commande (SE) est prévue,
    **en ce que** le disjoncteur est configuré d'une manière telle qu'avec une unité de coupure électronique (EU) à haute impédance resp. commutée à haute impédance et un courant dans un circuit basse tension, qui dépasse la première valeur seuil de courant de fuite, une information est signalée au moyen de l'unité de communication.

4.  Disjoncteur (SG) selon l'une des revendications précédentes, **caractérisé en ce qu'**une unité d'affichage dotée d'un affichage d'informations reliée à l'unité de commande (SE) est prévue sur le disjoncteur,
    **en ce que** le disjoncteur est configuré d'une manière telle qu'avec une unité de coupure électronique (EU) à haute impédance resp. commutée à haute impédance et un courant dans un circuit électrique basse tension, qui dépasse la première valeur seuil de courant de fuite, un affichage d'informations se produit.

5.  Disjoncteur (SG) selon l'une des revendications précédentes, **caractérisé en ce que** la première valeur seuil de courant de fuite se situe dans la plage de 30 mA, 6 mA ou 300 mA, plus spécialement dans la plage de 26 à 30 mA, 4 à 6 mA ou 290 à 300 mA.

6.  Disjoncteur (SG) selon l'une des revendications précédentes, **caractérisé en ce qu'**avec des contacts fermés de l'unité de contact d'interruption mécanique (MK) et de passage à haute impédance de l'unité de coupure électronique (EU), une vérification du dépassement de la première valeur seuil de courant de fuite après une première limite de temps est effectuée,
    plus particulièrement après une première limite de temps de 50 µs au moins, plus spécialement après 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs ou 1ms.

7.  Disjoncteur (SG) selon l'une des revendications précédentes, **caractérisé en ce que** le dépassement de la première valeur seuil de courant de fuite pour une première durée doit exister pour provoquer une ouverture des contacts, une signalisation de l'information resp. un affichage d'informations.

8.  Disjoncteur (SG) selon la revendication 7, **caractérisé en ce que** la première durée est dépendante du niveau du courant déterminé.

9.  Disjoncteur (SG) selon la revendication 7 ou 8, **caractérisé en ce que** la première durée est de 50 µs au moins, plus particulièrement est supérieure à 100 µs, 150 µs, 200 µs, 250 µs, 300 µs, 350 µs, 400 µs, 450 µs, 500 µs, 550 µs, 600 µs, 650 µs, 700 µs, 750 µs, 800 µs, 850 µs, 900 µs, 950 µs ou 1ms.

10. Disjoncteur (SG) selon la revendication 7 ou 8 ou 9, **caractérisé en ce que** la première durée s'élève à 5 ms au maximum.

11. Disjoncteur (SG) selon l'une des revendications précédentes, **caractérisé en ce qu'**une deuxième unité de capteur de tension (SU2) reliée à l'unité de commande est prévue pour déterminer le niveau de la tension sur l'unité de coupure électronique d'un conducteur,

    **en ce que** le niveau de la tension est comparé à une valeur seuil de tension et en cas de dépassement de la valeur seuil de tension, une vérification du dépassement de la première valeur seuil de courant de fuite est suspendue pour une deuxième durée.

12. Disjoncteur (SG) selon la revendication 11, **caractérisé en ce que** la deuxième durée est inférieure à 10 ms.

13. Disjoncteur (SG) selon la revendication 11 ou 12, **caractérisé en ce que** la valeur seuil de tension est supérieure à l'amplitude de la tension de réseau du circuit électrique basse tension, plus particulièrement supérieure à celle d'une tension de réseau élevée,

    **en ce que**, plus particulièrement, une tension de réseau élevée est une tension de plus de 10 % supérieure à l'amplitude de la tension de réseau, par rapport à l'amplitude de la tension de réseau.

14. Disjoncteur (SG) selon la revendication 11, 12, ou 13, **caractérisé en ce que** la valeur seuil de tension est inférieure à la rigidité diélectrique des éléments de commutation à base de semi-conducteurs utilisés de l'unité de coupure électronique (EU).

15. Procédé de protection d'un circuit électrique basse tension pour un disjoncteur, dans lequel :
    une unité de contact d'interruption mécanique (MK) est commutée en série avec une unité de coupure électronique (EU),

    - l'unité de contact d'interruption mécanique (MK) peut être commutée par une ouverture des contacts pour éviter un flux de courant ou une fermeture des contacts pour un flux de courant dans un circuit électrique basse tension,
    - l'unité de coupure électronique (EU) peut être commutée par des éléments de commutation à base de semi-conducteurs dans un état à haute impédance des éléments de commutation pour éviter un flux de courant ou un état à basse impédance des éléments de commutation pour le flux de courant dans le circuit électrique basse tension,
    - le niveau du courant dans le circuit électrique basse tension est déterminé et en cas de dépassement du niveau du courant au-dessus d'au moins une valeur seuil de courant de fuite, est initiée une prévention d'un flux de courant du circuit électrique basse tension par commutation à haute impédance de l'unité de coupure électronique (EU),
    - en ce qu'avec une unité de coupure électronique (EU) à haute impédance resp. commutée à haute impédance est déterminé, en outre, le niveau du courant dans le circuit électrique basse tension et, en cas de dépassement d'une première valeur seuil de courant de fuite, est initiée une ouverture des contacts de l'unité de contact d'interruption mécaniaue (MK).

16. Procédé selon la revendication 15, **caractérisé en ce qu'**en cas de dépassement de la première valeur seuil de courant de fuite est signalée une information.

17. Procédé selon la revendication 15 ou 16, **caractérisé en ce qu'**avec des contacts fermés de l'unité de contact d'interruption mécanique (MK) et de passage à haute impédance de l'unité de coupure électronique (EU), une vérification du dépassement de la première valeur seuil de courant de fuite après une première limite de temps est effectuée.

18. Procédé selon la revendication 15, 16 ou 17, **caractérisé en ce que** le dépassement de la première valeur seuil de courant de fuite pour une première durée doit exister pour provoquer une ouverture des contacts, une signalisation de l'information resp. un affichage d'informations.

19. Produit de programme informatique comprenant des instructions, qui, lors de l'exécution du programme par un microcontrôleur incitent celui-ci à soutenir, plus particulièrement à exécuter, les étapes de procédé d'un disjoncteur selon l'une des revendications 1 à 18.

20. Support de stockage lisible par un ordinateur sur lequel est enregistré le produit de programme informatique selon la revendication 19.

21. Signal de support de données qui transmet le produit de programme informatique selon la revendication 19.

FIG 1

EP 4 233 084 B1

FIG 2

EP 4 233 084 B1

# FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020366078 A